# EUROPEAN PATENT SPECIFICATION

(11) **EP 2 253 489 B1**
(45) Date of publication and mention of the grant of the patent: **08.04.2015**
(21) Application number: 08736685.2
(22) Date of filing: 14.02.2008
(51) Int. Cl.: B60G 3/20, B62D 5/04, B60G 7/00, B62D 17/00, B60G 17/016

(54) **SUSPENSION SYSTEM FOR MOTOR VEHICLES AND MOTOR VEHICLE INCLUDING SAID SYSTEM**
AUFHÄNGUNGSSYSTEM FÜR KRAFTFAHRZEUGE UND DAS SYSTEM ENTHALTENDES KRAFTFAHRZEUG
SYSTÈME DE SUSPENSION POUR VÉHICULES AUTOMOBILES ET VÉHICULE AUTOMOBILE COMPRENANT LEDIT SYSTÈME

(43) Date of publication of application: 24.11.2010
(73) Proprietor: Fundación Robotiker, 48170 Zamudio (Vizcaya) (ES)
(72) Inventor: PEÑA RODRÍGUEZ, Alberto, E-48170 Zamudio (Vizcaya) (ES); PEDRERO ÍÑIGUEZ, Juan, Manuel, E-48170 Zamudio (Vizcaya) (ES); DEL POZO ROJO, Dionisio, E-48170 Zamudio (Vizcaya) (ES); CORRAL SÁIZ, Javier, E-48170 Zamudio (Vizcaya) (ES)
(74) Representative: Stiebe, Lars Magnus
(86) International application number: PCT/ES2008/000081
(87) International publication number: WO 2009/101218

(56) References cited:
- EP-A1- 0 334 691
- EP-A1- 0 628 437
- EP-A2- 0 246 116
- FR-A1- 2 890 631
- GB-A- 2 203 711
- GB-A- 2 271 968
- US-A- 4 448 441
- US-A- 5 292 149
- US-A- 5 557 525
- US-A1- 2002 036 385

## Description

### Technical Field of the Invention

The present invention is applicable in the automotive industry, and more specifically in the suspension and safety systems of automotive vehicles.

### Background of the Invention

Among the multiple mechanical elements and subsystems comprised in an automotive vehicle, the wheel can be considered as a rigid solid having six degrees of freedom, which correspond to three rotations and three translations. In relation to the steering system of an automotive vehicle, two rotations with respect to two axes perpendicular to one another and contained in the plane of the wheel are mainly considered, the plane of the wheel being understood as that which is perpendicular to an axis of the wheel which passes through the area of contact of the tire of the wheel with the ground.

On one hand, the rotation about a vertical axis passing through the center of the wheel is considered, such rotation being a degree of freedom which is operated by means of the steering wheel of the vehicle. The angle formed by the plane of the wheel and the actual direction of the movement is the slip angle. As a consequence of the elasticity of the tire, the tread in the area of contact with the ground offers a rotation resistance caused by the friction existing between the rubber of the tire and the ground, usually the road asphalt. The contact tread is thus deformed and experiences a reorientation towards the direction of the wheel. The angular difference between the direction of the tread and the direction of the wheel is the slip angle, which provides a lateral force which also depends on the load supported by said wheel.

On the other hand, in the plane of the wheel there is another axis the rotation of which provides an alternative for guiding the vehicle, which is quantified by means of the camber angle of the wheel. The effect of coupling between the plane containing the wheel and the ground allows obtaining certain lateral stress which allows steering the automotive vehicle towards the desired course.

There is a quasilinear relationship between the camber angle and the lateral force, it being considered that the camber angle is positive when the upper part of the wheel is farther away than the lower part, whereas for negative values the lateral force generated has an opposite direction. As an example, for a usual camber angle value corresponding to 2º, a lateral force corresponding to approximately 300 N is obtained, said lateral force being able to be used to guide the automotive vehicle according to a suitable course.

The latest advances in the electronics, communications and computer programming fields are allowing the development of new safety functions and technologies for the purpose of preventing accidents, or at least minimizing the consequences thereof. These advances are incorporated in advanced driver assistance systems, ADAS.

Currently, there are active safety systems for automotive vehicles such as the Lane Departure Warning, LDW, system, warning the driver of a possible departure of the vehicle from the safe course by means of a light or sound signal.

There are also systems such as the lane change assistant, LCA, which applies a turning torque on the steering wheel, favoring the correction of the course in the event of a reaction of the driver or an emergency braking situation, comprising, among others, an anti-collision system.

The first generations of these systems have been introduced on the market, especially in high-end vehicles, a relatively short time ago. For example, in 1998 the Mercedes company introduced an Adaptative Cruise Control, ACC, system for the first time in Europe.

Different efforts have also been made to achieve a system for controlling and actuating the different degrees of freedom of the wheels of automotive vehicles by means of their association, in most of the cases, with the suspension system of the vehicle.

In this sense, there are suspensions comprising devices which allow changing the camber angle of the wheel, as described, for example, in Japanese patent number JP-2002063698, in which the location of the point of assembly of the suspension to the chassis of the upper fork is modified, such that said changes in the position of the points of fastening the tie bars to the chassis cause alterations in the position of the roll center of the vehicle, which entails a great drawback from the point of view of stability of the vehicle.

The roll axis is defined as a point of intersection between a plane of symmetry of the automotive vehicle and a plane containing the point of support of the wheel on the ground with a straight line defined as the intersection between the planes of support of the wheel on the chassis, i.e., there is a first plane containing the upper support elements, which is usually a triangle, of the suspension and a second plane in which the lower support elements of the suspension, are contained, which is usually another triangle, such that said two planes intersect in a line forming a plane with the point of contact between the wheel and the ground. The intersection of said plane with the plane of symmetry of the vehicle is the roll axis. There are two roll centers resulting from the intersection of the roll axis with the two transverse planes containing the front axis and the rear axis, respectively.

On the other hand, for the case of four-wheel-steerable automotive vehicles, United States patent number US-4895383 describes a method and a mechanism for controlling the camber angle in the rear wheels. Said mechanism incorporates detectors of the orientation direction of the wheel, devices and actuators for varying the camber angle and a control unit responsible for capturing the information of the sensors and sending the suitable control signal for controlling at least one wheel.

A case in which the camber angle is actively modified through an actuator is described in French patent number FR-2833233, which relates to a device which allows making the degree of freedom corresponding to the camber of the suspension independent, different configurations of the device being considered which provide different alternatives with different kinematic characteristics in which the instantaneous centers of the relative movement between assemblies of elements establish the kinematic and dynamic behavior of the automotive vehicle, a solution for a McPherson suspension mechanism being mentioned.

These devices comprise an actuator operated by an electric motor which pushes transversely in the upper part of the wheel, or in any upper support element of the suspension of the wheel. These suspensions also usually comprise a stub axle, which is the element supporting the wheel, a lower support triangle of the suspension which is attached on one side to the stub axle and on the other side to the chassis of the vehicle, an upper support triangle of the suspension which is also attached on one side to the stub axle and on the other side to the chassis of the vehicle, and a steering rod which is attached on one side to the stub axle and on the other side to the steering elements which are connected to the steering wheel.

British patent application No. GB-2203711-A discloses a method of and an apparatus for controlling rear road wheel camber of a four-wheel-steerable vehicle having front and rear road wheels steerable in the same or opposite directions, and comprises the features of the preamble of claim 1. The camber with respect to ground of at least the rear road wheel on the outer side of a cornering curve is controlled. The apparatus includes detectors for detecting the direction in which the rear road wheels are steered with respect to the front road wheels, the self-aligning torque on the front road wheels, and the steering force acting on a steering wheel, camber varying devices associated with rear wheel suspensions, actuators for operating the camber varying devices, and a control unit responsive to detecting signals from the detectors for applying a control signal to at least one of the actuators to control the camber of at least the rear road wheel on the outer side of the cornering curve when the rear wheels are steered.

Similarly, United States patent No. US-5557525-A relates to a wheel alignment control method for a motor vehicle and a control apparatus therefor in which every time a vehicle drive state, steering history, and high-speed steering-hold mode are discriminated by sensor outputs, a processor determines target values of a caster angle, camber angle, and toe angle in accordance with inference outputs computed by fuzzy inference based on fuzzy rules, corresponding individually to a plurality of vehicle drive modes, steering modes, and high-speed steering-hold mode, and discrimination results. Operating sections adjust the camber and the like by means of a driver circuit which responds to the processor outputs. Thus, a fine adjustment for alignment is made, and wheel alignment adaptable to the vehicle drive modes and the like is established.

All these devices have two main drawbacks. Firstly, when the camber angle of the wheel is modified, the roll center of the automotive vehicle varies, which affects the stability thereof. The problem occurs as a consequence of the fact that when the camber angle is changed by means of the actuator, the upper plane containing the upper support triangles of the suspension changes its position in space and, therefore, modifies the position of the roll center.

Secondly, another problem arising in these devices when the camber angle of the wheel is changed is that when the position of the wheel is modified, the position of the steering rod is also modified, which steering rod is attached to the stub axle for supporting the wheel in order to transmit the movements of the driver through the steering wheel, such that when the driver moves the steering wheel in one direction or the other, through the mechanisms comprised in the steering system, the steering rod moves, which steering rod in turn makes the wheel turn in one direction or the other. In short, the change in the position of the wheel caused by the mechanism for operating the camber angle, causes the movement of the steering rod, and said movement is transmitted to the steering wheel, causing a strange and uncomfortable feeling in the driver while driving.

### Description of the Invention

A first aspect of the present invention relates to a suspension system for automotive vehicles and a second aspect of the invention relates to an automotive vehicle comprising said system.

The suspension system object of the invention has the capacity to modify the camber angle of at least one wheel, said camber angle being an angle between a vertical plane of symmetry of the wheel and a vertical plane. The variation of the camber angle of the wheel allows introducing a lateral force causing the vehicle to turn in direction or the other. This allows, for example, increasing the stability of the vehicle in determined situations, optimizing the use of a tire or modifying the course, for example, in lane departure correction systems, comprising the collaboration of sensors and at least one control unit.

In recent decades, for the purpose of increasing the safety of automotive vehicles and preventing the numerous traffic accidents occurring as a consequence of losing control of the vehicle due to driver distractions, fatigue or drowsiness, various autonomous lane departure prevention systems are being developed, which entails a significant advance in the reduction of the number of traffic accidents.

An automotive vehicle capable of managing its course independently from the conventional steering system entails an added value in terms of maneuverability, since in the event of an emergency it assists but does replace the driver or his capacity of making a decision regarding the course he wishes to maintain, which is especially relevant in the event of failure or malfunction of the device object of the invention.

Furthermore, the invention contemplates its use and integration in vehicle architectures which are currently being developed, such as electric and hybrid automobiles, which are starting to incorporate steering systems based on by wire technologies. These steering systems propose, in some cases, alternatives to the conventional steering wheel by means of control levers which allow modifying different parameters of the configuration of the vehicle for driving it. This by wire technology involves replacing mechanical transmission elements with command signals by means of wires and the drives with electric motors commanded by said signals.

In the scope of application of the invention, applications related to an autonomous control of the automotive vehicle, associated with recent and foreseeable automobile trends which contemplate systems for controlling vehicles by means of the concept of cooperative maneuvers are also considered. In maneuvers of this type the vehicles are virtually autonomous, capable of detecting and recognizing obstacles, such as other vehicles for example, managing the control of the vehicle independently.

The sector towards which this invention is focused is the automotive sector, particularly the field of special vehicles, such as electric or hybrid vehicles, conventional vehicles, high-end vehicles and sport utility vehicles, or SUVs.

The suspension system for automotive vehicles proposed by the invention has the capacity to independently control the camber angle, and is configured to modify a camber angle of at least one wheel, wherein said at least one wheel is supported by a stub axle which in a lower area, below an axis of rotation of said at least one wheel, is articulated by means of a ball joint to a lower support, which can consist of a lower triangle which is in turn articulated by means of a ball joint to a chassis of the vehicle.

According to the invention, the system comprises a steering rod which is articulated by means of a ball joint to the stub axle and to steering elements, at the ends thereof. Said steering rod is contained in a plane defined by the lower support. The point of attachment between the steering rod and the stub axle is contained in an instantaneous axis of rotation of the lower support with respect to said stub axle in any situation of the suspension system, i.e., in any position of the lower support.

At one end the steering rod is a bar connected to steering elements of the automotive vehicle, specifically to the steering rack, articulated by means of a ball joint. Said articulation by means of a ball joint restricts the three translations and allows the three rotations. The opposite end of the steering rod is in turn connected to the stub axle, also by means of a ball joint.

The system comprises a connection joint articulated at the upper part by means of a ball joint to the stub axle, and a tie bar which at a first end is articulated by means of a ball joint to the connection joint, and at a second end is articulated by means of a ball joint to the chassis of the vehicle.

The system also comprises an actuator element rigidly attached to the connection joint and in an articulated manner by means of a ball joint to the chassis, said actuator element is configured to modify the camber angle of said at least one wheel by means of modifying the length of said actuator element.

In the system of the invention, the upper support elements of the suspension comprise the actuator element which allows varying the camber angle and which is attached on one hand to the chassis of the vehicle and on the other hand in a rigid manner to the connection joint located at the upper part of the stub axle.

The upper support elements of the suspension also comprise a tie bar attached in an articulated manner to the connection joint at one end and to the chassis of the vehicle at its opposite end. This tie bar is arranged in a direction substantially parallel to the forward movement direction of the vehicle, such that the effect of the longitudinal variation of the actuator element in the suspension is minimized.

The suspension system object of the invention allows modifying the camber angle by means of a special configuration or architecture which allows preventing the aforementioned problems.

A very important feature is that the actuator element is contained in the plane formed by the upper support elements of the suspension so that the extension or compression of the pin and therefore of the actuator element does not affect the position of the roll center, such that the shifts of the actuator element occur coinciding with a line of projection of the upper plane and, therefore, the changes in the camber angle of the wheel caused by the actuator element do not result in a modification of the roll center.

The steering rod is attached to the stub axle at a point of the axis of rotation between the stub axle and the lower support elements of the suspension. The movements of the wheel due to the actuation of the actuator element of the camber angle are thus transparent to the steering and therefore do not transmit any movement to the steering wheel.

The lower connection element is articulated by means of two connections to the chassis of the vehicle, which are preferably two spherical joints although they can also be two revolute joints with colinear axis.

In short, when the steering rod is thus positioned, the projection of the instantaneous axis of rotation of the relative movement between the stub axle and the lower support on a plane transverse to the forward movement direction coincides with the point of attachment of the steering rod and the stub axle. The main advantage provided by this arrangement is that when the camber angle is modified, the rotation of the assembly does not affect the steering rod because it is located on the axis of rotation of the stub axle and, consequently, does not affect the steering levels.

According to a preferred embodiment of the system, it is contemplated that the tie bar is oriented according to an angle not greater than 45º with respect to an axis perpendicular to the axis of rotation of said at least one wheel.

The location of the tie bar with respect to the horizontal plane is defined by the geometry of the assembly as occurs with the actuator element. The orientation of the tie bar is specified by a parameter δ, which is the angle of the tie bar with respect to a straight line defining the travel direction. This parameter δ must be less than or equal to 45º and the greater the horizontality of the tie bar in the travel direction, the lower the variation that it introduces in the caster of the suspension. The arc described by the point of connection of the tie bar with the attachment joint will be more horizontal the greater the radius defined by the tie bar.

According to a preferred embodiment of the system, it is also contemplated that the actuator element is oriented according to an angle comprised between -15º and 15º with respect to an axis parallel to the axis of rotation of said at least one wheel.

The main advantage of this particularity resides in the fact that the variations of the camber angle induced by the actuator element do not affect the rest of the geometry of the suspension assembly, specifically it will not affect the position of the roll center. This is justified by the fact that the roll center is geometrically determined by means of the plane containing the actuator element.

The actuator element preferably comprises a cylinder and a pin configured to be operated by driving means, which can consist of an electric motor. It is also contemplated that said actuator element comprises at least one position sensor configured to detect the position of said actuator element.

The possibility that the actuator element comprises a non-return system configured to withstand stresses from said at least one wheel and preventing a transmission of said stresses to the actuator element is contemplated. The intention is to prevent a modification of the length of the actuator element as a consequence of the stresses that it receives in its connection to the connection joint, i.e., that it moves only when it is actuated and not as a consequence of bumps or other forces that it has to withstand.

The fact that the system has a single actuator element, with a non-return system, such that it only uses a single electric or hydraulic actuator incorporating a position sensor for modifying the camber angle, can be emphasized. The design of the remaining elements object of the invention prevents the need for additional actuation elements to prevent adverse effects in the suspension levels which would otherwise have to be compensated by additional actuators synchronized with the main actuator. The system presented can be equivalent to a conventional suspension by substituting the actuator with a rod of a fixed length, provided that the remaining elements of the suspension are designed with the particularities described in the claims.

The system comprises a non-return system which can consist of a worm screw system such that, in the event of loss of electric current, the stresses from the wheel are not capable of modifying the configuration of the system, thus preventing a potentially dangerous situation.

The length of the actuator element is varied for modifying the camber of the wheel by modifying the upper part of the stub axle, therefore the connection of said actuator is performed at the upper part of the stub axle. By placing the tie bar in the upper area, on one hand better protection of the actuator is achieved since it is moved away from the road where it would be impacted by loose objects. On the other hand, the accessibility to the system is improved in the event of review and/or repair from the hood, for example.

A second aspect of the invention relates to an automotive vehicle comprising a suspension system according to any of those defined above.

Additionally, this system for modifying the course could be used to provide the steering system of the vehicle with a specific and convenient alternative for controlling the orientation of the wheel by means of a control lever. This would allow operating a lever type steering control which allows controlling the turning by means of camber angle or by means of slip angle of the wheel in an independent manner.

Another object of this invention is to provide the steering system with a more comfortable driving means, thus reducing the number of turns of the steering control, favoring the maneuverability.

An advantage of the present invention is the simplicity for its implementation since it is formed by a relatively small number of components which can be chosen from among a wide range of typologies. In its simplest embodiment, it uses two sensors, a lane departure warning sensor and a dynamic vehicle behavior sensor, a controller and camber angle modifiers, one in each opposite wheel of one and the same axle. The sensors can be of several types for detecting the lateral course reference line and the lateral force of the vehicle; the controller can be an electronic unit which is independent or included in an original Electronic Control Unit, ECU, of the vehicle.

Another advantage of this invention is the wide range of vehicles in which it can be implemented, from conventional four-wheel vehicles, both in the front axle and in the rear axle and even in both. It can also be used in three-wheel vehicles, either in the opposite wheels or in the third wheel. And it can be implemented for vehicles with a larger number of wheels such as car trains.

The present invention proposes using the lateral force induced by the camber of the tire as a system for varying the steering thereof. The management of the variation of this parameter by means of a control system provides the vehicle with a system for varying the course without affecting the conventional steering, allowing the compensation of lane departures resulting from driver distractions. Nevertheless, it is important to emphasize that the magnitude of the induced force is approximately 10% of the force which is introduced when the steering wheel is rotated by means of the slip angle. The driver will thus always be able to correct the steering variation by means of the conventional steering system in the event of a possible failure or malfunction of the proposed system.

With the invention, the driver's perception is positive, since the vehicle remains on a safe course but without noticing a variation in the steering wheel in an autonomous manner, whereby the feeling of control is not lost.

Until now, all efforts put into modifying the camber angle have focused on optimizing the lateral force in the wheel, but not on using it as a device for modifying the course.

Furthermore, another differential feature of the invention is the placement of the point of attachment of the steering rod at the height of the connection of the lower attachment support or triangle, thus preventing modifications of the initial geometry of the steering.

It is true that there are other systems of preventing lane departure but they are either simple light and/or sound warning signals, or steering wheel turning assistance. In no case are they autonomous systems which allow modifying the course of the vehicle, among others, as in the case of the proposed invention.

In short, the essential inventive value resides in the system for varying the camber angle as a mechanism for controlling the course of the vehicle and its implementation by means of a relatively simple mechanism, which allows not interfering in the capabilities or in the configuration of conventional steering. In practice, the invention contemplates being applied as an active safety system to prevent lane departures of the vehicle.

The system of the invention is a preventive safety system which allows preventing the departure of the vehicle from the safe course under determined driving conditions in which the direction of the forces changes when the orientation of the wheel is modified to prevent the vehicle from crossing over the continuous line of the side.

The proposed invention is a system which, by acting on the camber angle of the wheel, allows introducing a determined lateral force to correct the course of the vehicle without the actuation of the steering wheel. Therefore, the course correction proposed by the invention comprises a system and a method which are defined in the following paragraphs.

The invention contemplates a method of adjusting the camber angle or course correction process. Said system for varying the course based on the camber angle of the wheel mainly comprises three levels. In the first one, a network of sensors sends different information signals. The first signal is from the lane departure LDW sensor, which consists of a sensor configured to detect if the vehicle is going to depart from a safe course under determined conditions, as well as to detect continuous lines, obstacles, etc. The second signal consists of a speed limit below which the system is not activated and is from the speed sensor of the vehicle. In the third place, if a visual lane change indicator, preferably a turn signal, is activated, the system does not work either, and additionally, if the user has decided to disconnect the system, no original lane departure signal is activated either. To evaluate the dynamic behavior of the vehicle and to not cause instability in the driving, for example in a curve, the system has information about the lateral acceleration of the vehicle, which is a third signal, as well as about the turning of the steering wheel and/or turning speed of the steering wheel, which is a fourth signal.

These signals are sent to an electronic control unit, which can be a specific one for the system, or it can be a functionality included in the original electronic control unit of the vehicle, which evaluates the information of the different sensors and decides as to the necessity to act on the camber angle of the wheel, in which case it determines the magnitude of the shift of the actuator element, which is the cause of the direct modification on the wheel. In the event that none of the conditions necessary for the actuation are present, such as speed lower than the operating speed limit, the intentional variation of the driver or disconnection of the system, for example, the orientation of the wheel is not changed. The cycle is fed back and iterated as many times as the control unit considers necessary until recovering the course.

The operating mode according to the order which the electronic control unit processes consists of sending a command signal to the actuator element which generates the lateral shift necessary for introducing an angular variation of the wheel with respect to the vertical plane thereof.

Therefore, according to the described invention, the suspension system for automotive vehicles and the automotive vehicle comprising said system proposed by the invention constitute an advance in suspensions and vehicles used up until now and fully solves in a satisfactory manner the drawbacks set forth above, insofar as what is done in racing vehicles in which this length is frequently varied to modify the camber angle without changing critical dimensions of the suspension such as the height of the roll center by means of other devices.

With respect to what has been described in Japanese patent number JP-2002063698, in which the location of the point of assembly of the upper fork to the chassis is modified, the invention does not modify the points of anchoring the elements, the changes in the position of the points of fastening the tie bars to the chassis cause moderate changes in the position of the roll center, so the device object of the invention is advantageous with respect to those which modify the position of the inner point of anchoring the tie bar.

In relation to the arrangement of the tie bar aligned in the travel direction, the actuator element changes its length, scarcely modifying other levels, which allows minimal alteration in the caster of the wheel. The need to have three kinematic pairs in a conventional suspension of the type of superimposed triangles means that in the event of incorporating an actuator to modify the geometry of the fork, and accordingly the levels of the suspension, the arrangement must be such that the effect on other levels such as the caster is not affected. The device of the invention comprises a longitudinal tie bar attached to the remaining steering elements of the vehicle by means of a spherical ball joint and with a defined length to prevent the excessive variation of the caster angle in the compression and extension of the suspension. This arrangement of longitudinal tie bars in the suspension also improves the resistant performance of the tie bar, because during braking, the situation which typically generates the greatest loads in a suspension, it causes a tensile stress on the tie bar, offering great rigidity of the system with a minimal weight, because it is the optimal form of work of elements of this type.

In relation to the command independence of the device, the user does not need to modify the turning angle of the steering wheel so that the vehicle changes direction because the actuator element receives the order from the control system. The driver of the vehicle must simply maintain the position of the steering wheel and the device commanded by the control system varies the direction of the vehicle by means of the development of the lateral force upon modifying the camber angle.

In relation to the decoupling of the steering and suspension levels, the turning levels of the steering are not modified by the arrangement of the steering tie bar in the same plane of the triangle or lower fork of the suspension. The device object of the invention prevents having to make any correction on the steering tie bar of the vehicle, because during the modification of the camber angle, the axis of rotation of the stub axle is determined by the ball joint of the lower support or fork and the end of the steering tie bar. Modifications in the toe-in of the wheels are thus prevented. If the device does not use this arrangement, a change of the camber angle in the wheels would cause changes in the angle of the wheel modified by the conventional steering tie bar, coupling the effects of the modification of the camber angle with said angle. The arrangement of the fork or triangle coinciding with the steering tie bar further prevents the effect referred to as bump steer, which varies the orientation of the wheels exerting parasitic lateral forces when one of the wheels goes over a bump.

The architecture of the system of the invention is highly versatile and allows implementing functions of different types, such as evasive maneuvers, platooning and other ADAS systems relating to the steering of the vehicle such that the user maintains control over the slip angle, which is what generates the greatest amount of lateral force. The device is considered to be non-intrusive in driving and has the advantage that it does not require modifying the platform of the vehicle.

In relation to optimizing the use of the tire, the system object of the invention allows maximizing the lateral force for a determined tire size, which involves a reduction of consumption of the vehicle, because the same lateral force can be generated with narrower tires, being equivalent from the safety point of view. This is due to the fact that tires with a smaller front section and lower friction losses reduce consumption. The capacity to modify the camber angle allows having an automated adjustment, which results in making better use of the tire, prolonging its service life because it assures uniform wear, which in turn results in a benefit for the environment.

### Description of the Drawings

To complement the description that is being made and for the purpose of aiding to better understand the features of the invention according to a preferred practical embodiment thereof, a set of drawings is attached as a part of said description in which the following has been depicted with an illustrative and non-limiting character:
Figure 1 shows a schematic elevational view of a wheel, in which the camber angle and the influence of the actuator element in the roll center can be seen.

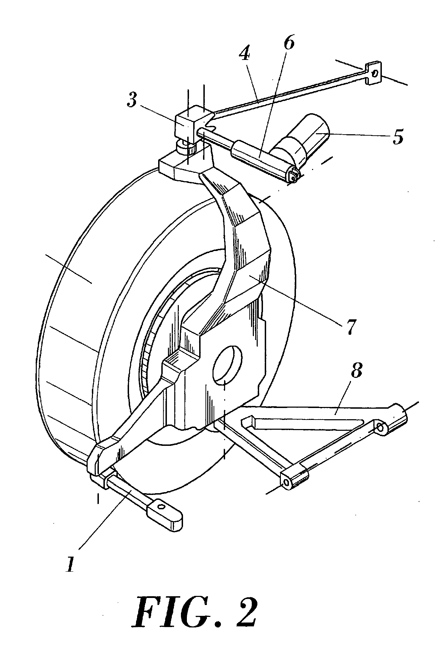

Figure 2 shows a schematic perspective view of the system of the invention, incorporated in a wheel of an automotive vehicle.
Figure 3 shows a schematic profile view from an inner side of the system depicted in Figure 2.
Figure 4 shows a schematic elevational view of the system depicted in Figures 2 and 3.
Figure 5 shows a schematic plan view from an upper viewpoint of the suspension system depicted in Figures 2 to 4.

### Preferred Embodiment of the Invention

In view of the discussed figures, it can be observed how in one of the possible embodiments of the invention the suspension system for automotive vehicles proposed by the invention is configured to modify a camber angle of a wheel (2), wherein said wheel (2) is supported by a stub axle (7) which in a lower area, below an axis of rotation of the wheel (2), is articulated by means of a ball joint to a lower support (8) consisting of a lower triangle which is in turn articulated by means of a ball joint to a chassis of the vehicle.

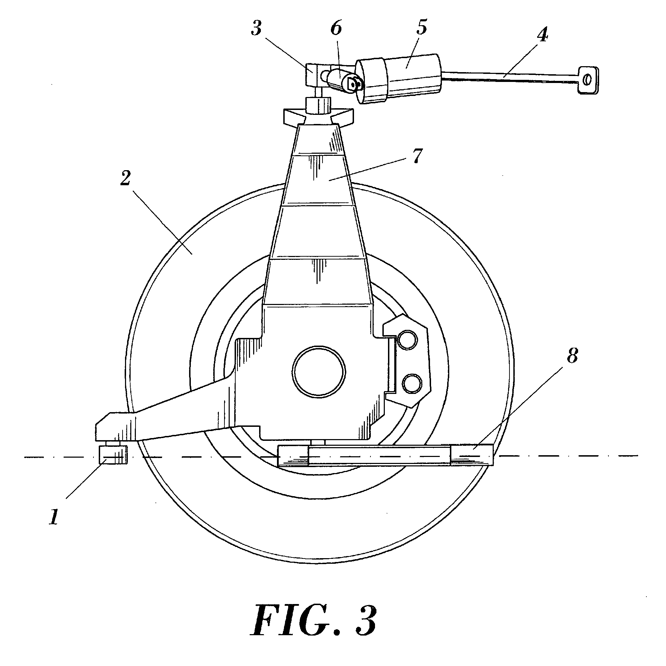

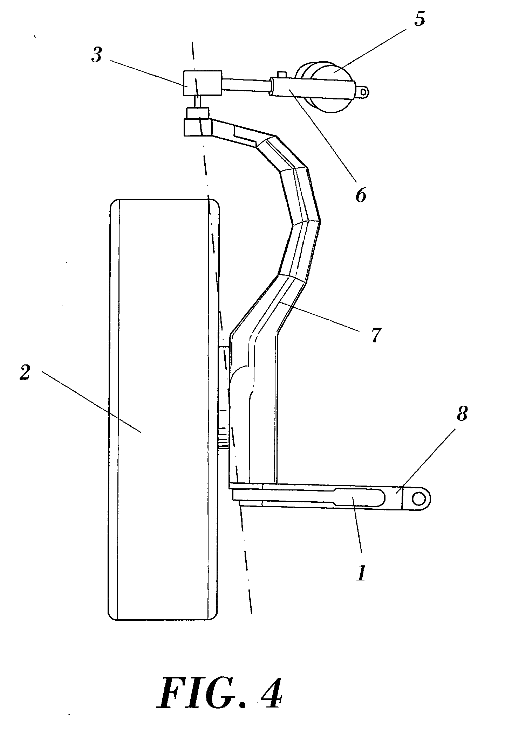

The system comprises a steering rod (1) which is articulated by means of a ball joint to the stub axle (7) and to steering elements at respective ends. Said steering rod (1) is contained in a plane defined by the lower support (8). The point of attachment between the steering rod (1) and the stub axle (7) is contained in an instantaneous axis of rotation of the lower support (8) with respect to said stub axle (7) in any situation of the suspension system, as can be seen in Figures 3 and 4.

The system comprises a connection joint (3) articulated at the upper part by means of a ball joint to the stub axle (7), and a tie bar (4) which at a first end is articulated by means of a ball joint to the connection joint (3), and at a second end is articulated by means of a ball joint to the chassis of the vehicle.

The system also comprises an actuator element (6) rigidly attached to the connection joint (3) and in an articulated manner by means of a ball joint to the chassis, said actuator element (6) is configured to modify the camber angle of the wheel (2) by means of modifying the length of said actuator element (6).

In the system of the invention, the actuator element (6) is attached on one hand to the chassis of the vehicle and on the other hand it is rigidly attached to the connection joint (3) located at the upper part of the stub axle (7). Said actuator element (6) comprises a cylinder and a pin configured to be operated by an electric motor.

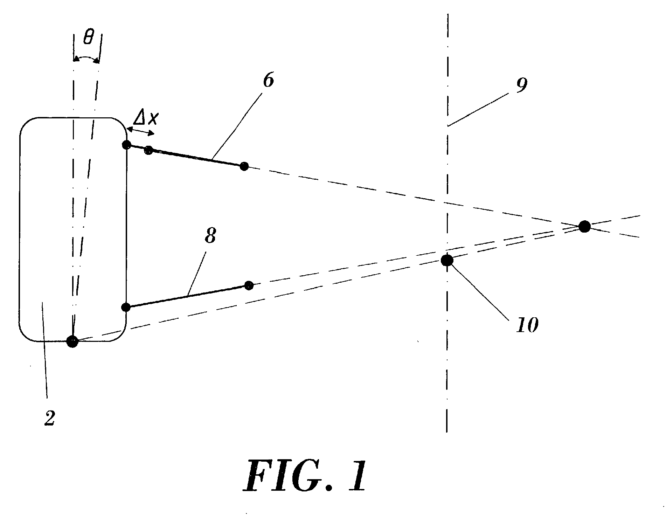

The tie bar (4) is also attached in an articulated manner to the connection joint (3) at one end and to the chassis of the vehicle at its opposite end. This tie bar (4) is arranged in a direction substantially parallel to the forward movement direction of the vehicle, such that the effect of the longitudinal variation of the actuator element (6) in the suspension is minimized, as can be seen in Figure 1, where it can be seen that the actuator element (6) is contained in the plane formed by the upper support elements of the suspension such that the extension or compression of the actuator element (6) does not affect the position of the roll center (10). The shifts of the actuator element (6) occur coinciding with a line of projection of the upper plane and, therefore, the changes in the camber angle of the wheel caused by the actuator element (6) do not result in a modification of the roll center (10).

The lower connection element (8) is articulated by means of two connections to the chassis of the vehicle, which are two revolute joints with colinear axis.

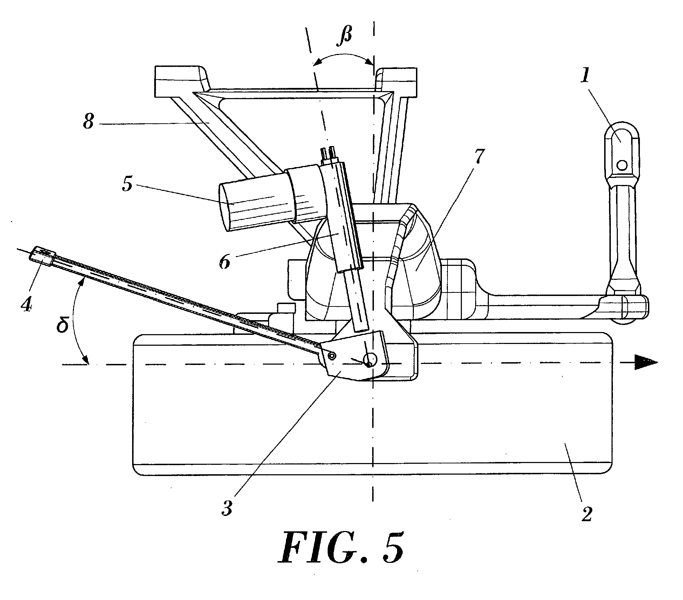

The tie bar (4) is oriented according to an angle not greater than 45º with respect to an axis perpendicular to the axis of rotation of the wheel (2), as can be seen in Figure 5. The orientation of the tie bar (4) is specified by a parameter δ, which is the angle of the tie bar with respect to a straight line defined by the travel direction. This parameter δ must be less than or equal to 45º and the greater the horizontality of the tie bar (4) in the travel direction, the lower the variation that it introduces in the caster of the suspension.

Likewise, the actuator element (6) is oriented according to an angle comprised between -15º and 15º with respect to an axis parallel to the axis of rotation of the wheel (2).

Figure 5 shows the position and orientation of the actuator element (6) according to a plan view, which is defined according to its orientation with respect to a direction transverse to travel. The actuator element (6) has an orientation defined by a parameter β which is comprised between -15º and 15º, such that the variations of the camber angle caused by the actuator element (6) do not affect the rest of the geometry of the suspension assembly, specifically, they do not affect the position of the roll center (10). This is justified because the roll center (10) is located by means of a straight line containing the actuator element (6), specifically, it is obtained in the intersection of the straight line with the longitudinal plane of symmetry of the vehicle (9), as shown in Figure 1.

The actuator element (6) is actuated by driving means (5), consisting of an electric motor. The actuator element (6) also comprises position sensors configured to detect the position of said actuator element (6).

Finally, the actuator element (6) comprises a non-return system configured to prevent a transmission of stresses from the wheel (2) to said actuator element (6).

In view of this description and set of drawings, the person skilled in the art will be able to understand that the embodiments of the invention that have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Suspension system for automotive vehicles, configured to modify a camber angle of at least one wheel (2), wherein said at least one wheel (2) is supported by a stub axle (7) which in a lower area, below an axis of rotation of said at least one wheel (2), is articulated by means of a ball joint to a lower support (8) which is in turn articulated by means of a ball joint to a chassis of the vehicle, wherein the suspension system comprises:
- a steering rod (1) articulated by means of a ball joint to the stub axle (7) and to steering elements, wherein said steering rod (1) is contained in a plane defined by the lower support (8), and wherein the point of attachment between the steering rod (1) and the stub axle (7) is contained in an instantaneous axis of rotation of the lower support (8) with respect to said stub axle (7) in any situation of the suspension system,
- a connection joint (3) articulated at the upper part by means of a ball joint to the stub axle (7),
- a tie bar (4) which at a first end is articulated by means of a ball joint to the connection joint (3) and at a second end is articulated by means of a ball joint to the chassis of the vehicle, and
- an actuator element (6) rigidly attached to the connection joint (3) and in an articulated manner by means of a ball joint to the chassis, said actuator element (6) being configured to modify the camber angle of said at least one wheel (2) by means of modifying the length of said actuator element (6),
**characterized in that** the actuator element (6) is contained in a plane formed by upper support elements of the suspension comprising the tie bar (4).

2. Suspension system according to claim 1, wherein the tie bar (4) is oriented according to an angle not greater than 45° with respect to an axis perpendicular to the axis of rotation of said at least one wheel (2).

3. Suspension system according to any of the previous claims, wherein the actuator element (6) is oriented according to an angle comprised between -15° and 15° with respect to an axis parallel to the axis of rotation of said at least one wheel (2).

4. Suspension system according to any of the previous claims, wherein the actuator element (6) is actuated by means of driving means (5).

5. Suspension system according to any of the previous claims, wherein the actuator element (6) comprises at least one position sensor configured to detect the position of said actuator element (6).

6. Suspension system according to any of the previous claims, wherein the actuator element (6) comprises a non-return system configured to prevent a transmission of stresses from said at least one wheel (2) to said actuator element (6).

7. Automotive vehicle, **characterized in that** it comprises a suspension system according to any of the previous claims.

## Patentansprüche

1. Aufhängungssystem für Automobile, das zur Modifizierung eines Sturzwinkels zumindest eines Rades (2) ausgebildet ist, wobei das zumindest eine Rad (2) durch einen Achsschenkel (7) gelagert ist, der in einem unteren Bereich unterhalb einer Drehachse des zumindest einen Rades mittels eines Kugelgelenks an einem unteren Träger (8) angelenkt ist, der wiederum mittels eines Kugelgelenks an einem Chassis des Fahrzeugs angelenkt ist, wobei das Aufhängungssystem umfasst:
- eine Lenkstange (1), die mittels eines Kugelgelenks an dem Achsschenkel (7) und an Lenkungselementen angelenkt ist, wobei die Lenkstange (1) in der durch den unteren Träger (8) definierten Ebene enthalten ist, und wobei der Befestigungspunkt zwischen der Lenkstange (1) und dem Achsschenkel (7) in einer momentanen Drehachse des unteren Trägers (8) bezüglich des Achsschenkels in jeder Lage des Aufhängungssystems enthalten ist,
- ein Verbindungsgelenk (3) das am oberen Abschnitt mittels eines Kugelgelenks an dem Achsschenkel (7) angelenkt ist,
- eine Verbindungsstange (4), die an einem ersten Ende mittels eines Kugelgelenks an dem Verbindungsgelenk (3) angelenkt ist und an einem zweiten Ende mittels eines Kugelgelenks an dem Chassis des Fahrzeugs angelenkt ist, und
- ein Stellglied (6), das starr an dem Verbindungsgelenk (3) und mittels eines Kugelgelenks angelenkt an dem Chassis befestigt ist, wobei das Stellglied (6) zur Modifizierung eines Sturzwinkels des zumindest einen Rades (2) mittels der Modifizierung der Länge des Stellglieds (6) ausgebildet ist,
**dadurch gekennzeichnet, dass** das Stellglied (6) in einer Ebene enthalten ist, die durch obere Trägerelemente der Aufhängung gebildet wird, die die Verbindungsstange (4) umfassen.

2. Aufhängungssystem nach Anspruch 1, wobei die Verbindungsstange (4) gemäß einem Winkel ausgerichtet ist, der nicht größer als 45° bezüglich einer Achse ist, die zur Drehachse des zumindest einen Rades (2) rechtwinklig ist.

3. Aufhängungssystem nach einem der vorangehenden Ansprüche, wobei das Stellglied (6) gemäß einem zwischen -15° und 15° umfassten Winkel bezüglich einer Achse ausgerichtet ist, die zur Drehachse des zumindest einen Rades (2) parallel ist.

4. Aufhängungssystem nach einem der vorangehenden Ansprüche, wobei das Stellglied (6) durch Antriebsmittel (5) betätigt wird.

5. Aufhängungssystem nach einem der vorangehenden Ansprüche, wobei das Stellglied (6) zumindest einen Positionssensor umfasst, der ausgebildet ist, die Position des Stellgliedes (6) zu erfassen.

6. Aufhängungssystem nach einem der vorangehenden Ansprüche, wobei das Stellglied (6) ein Rückleitungsschutzsystem, das ausgebildet ist, eine Übertragung von Lasten von dem zumindest einen Rad (2) auf das Stellglied (6) zu verhindern.

7. Automobil, **dadurch gekennzeichnet, dass** es ein Aufhängungssystem nach einem der vorangehenden Ansprüche aufweist.

## Revendications

1. Système de suspension pour véhicules automobiles, configuré pour modifier un angle de carrossage d'au moins une roue (2), dans lequel ladite au moins une roue (2) est supportée par un porte-fusée (7) qui, dans une portion inférieure, située en dessous d'un axe de rotation de ladite au moins une roue (2), est articulée au moyen d'un joint à rotule à un support inférieur (8) qui lui-même est articulé au moyen d'un joint à rotule à un châssis du véhicule, le système de suspension comprenant :
- une biellette de direction (1) articulée au moyen d'un joint à rotule au porte-fusée (7) et à des éléments de direction, ladite biellette de direction (1) étant contenue dans un plan défini par le support inférieur (8), et le point d'attache entre la biellette de direction (1) et le porte-fusée (7) étant contenu dans un axe instantané de rotation du support inférieur (8) par rapport audit porte-fusée (7) dans toutes les situations du système de suspension,
- un joint de connexion (3) articulé dans la partie supérieure au porte-fusé (7) au moyen d'un joint à roture,
- un tirant (4) articulé par une première extrémité au joint de connexion (3) au moyen d'un joint à rotule et par une deuxième extrémité au châssis du véhicule au moyen d'un joint à rotule, et
- un élément d'actionnement (6) attaché rigidement au joint de connexion (3) et de façon articulée au châssis au moyen d'un joint à rotule, ledit élément d'actionnement (6) étant configuré pour modifier l'angle de carrossage de ladite au moins une roue (2) en modifiant la longueur dudit élément d'actionnement (6), **caractérisé en ce que** l'élément d'actionnement (6) est contenu dans un plan formé par des éléments support supérieurs de la suspension comprenant le tirant (4).

2. Système de suspension selon la revendication 1, dans lequel le tirant (4) est orienté selon un angle ne dépassant pas 45° par rapport à un axe perpendiculaire à l'axe de rotation de ladite au moins une roue (2).

3. Système de suspension selon l'une des revendications précédentes, dans lequel l'élément d'actionnement (6) est orienté selon un angle compris entre - 15° et 15° par rapport à un axe parallèle à l'axe de rotation de ladite au moins une roue (2).

4. Système de suspension selon l'une des revendications précédentes, dans lequel l'élément d'actionnement (6) est actionné à l'aide de moyens d'entraînement (5)

5. Système de suspension selon l'une des revendications précédentes, dans lequel l'élément d'actionnement (6) comprend au moins un capteur de position configuré pour détecter la position dudit élément d'actionnement (6).

6. Système de suspension selon l'une des revendications précédentes, dans lequel l'élément d'actionnement (6) comprend un système de non-retour configuré pour empêcher la transmission des efforts de ladite au moins une roue (2) audit élément d'actionnement (6).

7. Véhicule automobile, **caractérisé en ce qu'**il comprend un système de suspension selon l'une des revendications précédentes.
